# EUROPEAN PATENT APPLICATION

(11) **EP 3 620 394 A1**
(43) Date of publication of application: **11.03.2020**
(21) Application number: 18275140.4
(22) Date of filing: 06.09.2018
(51) Int. Cl.: B64G 1/40, F03H 1/00, F02K 9/50

(54) **A PROPULSION SYSTEM**

(71) Applicant: Airbus Defence and Space Limited, Stevenage Hertfordshire SG1 2AS (GB)
(72) Inventor: Sadler, James Edward, Stevenage, Hertfordshire SG1 2AS (GB); Giannetti, Vittorio, Stevenage, Hertfordshire SG1 2AS (GB); Gray, Howard, Stevenage, Hertfordshire SG1 2AS (GB)
(74) Representative: Newcombe, Christopher David

(57) **Abstract**

The present invention relates to a propulsion system (200) for a spacecraft comprising at least one chemical propulsion engine (202), at least one electrical propulsion engine (204); and, a propellant feed system (206) comprising: a propellant supply system including at least one tank to store a common propellant; wherein the propellant supply system is configured to deliver a controlled flow of the common propellant to both the chemical propulsion engine (202) and the electrical propulsion engine (204). The present invention also relates to the use of a common propellant in a spacecraft and a method of providing a common propellant to an electrical and a chemical propulsion engine.

## Description

### Field of the Invention

The present invention relates generally to a propulsion system for a spacecraft and particularly to a hybrid propulsion system.

### Background

Spacecraft propulsion systems typically include engines which may be categorised as chemical or electrical propulsion engines.

Generally, chemical propulsion systems are used for high thrust manoeuvers, such as fast orbit raising, short duration attitude control manoeuvers including de-tumbling and safe mode acquisition, and chemical orbit raising in non-electric orbit raising (EOR) spacecraft. Chemical propulsion systems typically generate thrusts ≥0.15N, and can generate thrusts up to several hundred Newtons, at specific impulses (Iₛₚ) typically lower than 500 seconds. Chemical propulsion systems can be either bipropellant or monopropellant systems and generate thrust by expelling gases generated via chemical reactions through a nozzle. The cost of chemical propulsions systems and propellants is generally low, although the cost of cryogenic systems can be significantly higher.

Electrical propulsion systems are used for efficient high Iₛₚ manoeuvers where thrust is not a constraint, such as those with large delta-V orbit raising requirements, for example in EOR spacecraft. Electrical propulsion engines, such as Hall thrusters, typically use xenon or other noble gases as propellants. These engines generate very low thrusts at specific impulses typically from 700 seconds up to several thousand seconds. The cost of these systems and propellants is generally high.

Conventionally, where a cross-over of high thrust and high specific impulse is required, two separate systems need to be added to a spacecraft at a significant cost, volume and mass penalty.

### Summary of the Invention

According to a first aspect of the invention, there is provided a propulsion system for a spacecraft comprising at least one chemical propulsion engine; at least one electrical propulsion engine; and a propellant feed system comprising: a propellant supply system including at least one tank to store a common propellant; wherein the propellant supply system is configured to deliver a controlled flow of the common propellant to both the chemical propulsion engine and the electrical propulsion engine.

In some embodiments, the propellant feed system further comprises a pressurant gas system comprising a pressurant gas.

In some embodiments, the pressurant gas system is a repressurising system.

In some embodiments, the pressurant gas is an inert gas.

In some embodiments, the inert gas is helium, neon, argon, krypton, xenon or nitrogen.

In some embodiments, the electrical propulsion system further comprises at least one neutraliser.

In some embodiments, the pressurant gas is fed directly into the at least one neutraliser.

In some embodiments, the at least one neutraliser is a hollow cathode.

In some embodiments, the propellant feed system comprises a self-pressurised pressurant gas system.

In some embodiments, the at least one electrical propulsion engine further comprises an evaporator.

In some embodiments, the evaporator is configured to process inlet pressures of equal to or greater than a required inlet pressure of the at least one chemical engine.

In some embodiments, the propellant is fed directly into the electrical propulsion engine.

In some embodiments, the propulsion system further comprises a processor configured to control a high thrust mode of the propulsion system using the at least one chemical propulsion engine.

In some embodiments, the propulsion system further comprises a processor configured to control a high Iₛₚ mode of the propulsion system using the at least one electrical propulsion engine.

In some embodiments, the propulsion system further comprises a power processing unit.

In some embodiments, the at least one chemical propulsion engine is a bipropellant engine or a monopropellant engine.

In some embodiments, the propulsion system further comprises a second hypergolic propellant.

In some embodiments, the common propellant is not chemically decomposed prior to being fed into the electrical propulsion engine.

In some embodiments, the common propellant has an ionisation energy less than 20 eV and a density at ambient conditions greater than 600 kg/m³.

In some embodiments, the common propellant is selected from the group consisting of a solid, a liquid monopropellant or one component of a liquid bipropellant.

In some embodiments, the propellant comprises tri-amines, such as trimethylamine and tripropylamine; hydrogen peroxide or high test peroxide.

According to a second aspect of the invention, there is provided a propulsion system for a spacecraft comprising: at least one electrical propulsion engine comprising at least one neutraliser; and a pressurant gas system comprising a pressurant gas; wherein the pressurant gas is fed directly into the at least one neutraliser.

In some embodiments, the pressurant gas system according to the second aspect is a repressurising system.

In some embodiments, the at least one neutraliser according to the second aspect is a hollow cathode.

In some embodiments, the pressurant gas according to the second aspect comprises an inert gas.

In some embodiments, the inert gas according to the second aspect is helium, neon, argon, krypton, xenon or nitrogen.

In some embodiments, the propulsion system according to the second aspect further comprises at least one chemical propulsion engine.

In some embodiments, the propulsion system according to the second aspect further comprises a processor configured to control a high thrust mode of the propulsion system using the at least one chemical propulsion engine.

In some embodiments, the propulsion system according to the second aspect further comprises a propellant feed system comprising a propellant supply system including at least one tank to store a common propellant; wherein the propellant supply system is configured to deliver a controlled flow of the common propellant to both the chemical propulsion engine and the electrical propulsion engine.

In some embodiments, the at least one electrical propulsion engine according to the second aspect further comprises an evaporator.

In some embodiments, the propulsion system according to the second aspect further comprises a processor configured to control a high Iₛₚ mode of the propulsion system using the at least one electrical propulsion engine.

In some embodiments, the propulsion system according to the second aspect further comprises a processor configured to control a high thrust mode of the propulsion system using the at least one chemical propulsion engine.

In some embodiments, the at least one chemical propulsion engine is a bipropellant engine or a monopropellant engine.

In some embodiments, the propulsion system further comprises a second hypergolic propellant.

In some embodiments, the propulsion system according to the second aspect further comprises a power processing unit.

In some embodiments, the common propellant according to the second aspect is not chemically decomposed prior to being fed into the electrical propulsion engine.

In some embodiments, the common propellant according to the second aspect has an ionisation energy less than 20 eV and a density at ambient conditions greater than 600 kg/m₃.

In some embodiments, the common propellant according to the second aspect is selected from the group consisting of a solid, a liquid monopropellant or one component of a liquid bipropellant pair of substances.

In some embodiments, the propellant according to the second aspect comprises tri-amines, such as trimethylamine and tripropylamine, hydrogen peroxide, or high test peroxide.

According to a third aspect of the invention, there is provided use of a common propellant in a spacecraft propulsion system comprising at least one electrical propulsion engine and at least one chemical propulsion engine.

According to a fourth aspect of the invention, there is provided a method of providing a common propellant to spacecraft propulsion system comprising at least one electrical propulsion engine and at least one chemical propulsion engine.

### Brief Description of the Drawings

Embodiments of the present invention will now be described, by way of example, with reference to the accompanying drawings, in which:
Fig. 1 is an example of spacecraft propulsion systems of the prior art;
Fig. 2 is a diagram of a hybrid propulsion system according to a first embodiment;
Fig. 3 is a diagram of the hybrid propulsion system according to the first embodiment; and
Fig. 4 is a diagram of a propulsion system according to a second embodiment.

### Detailed Description

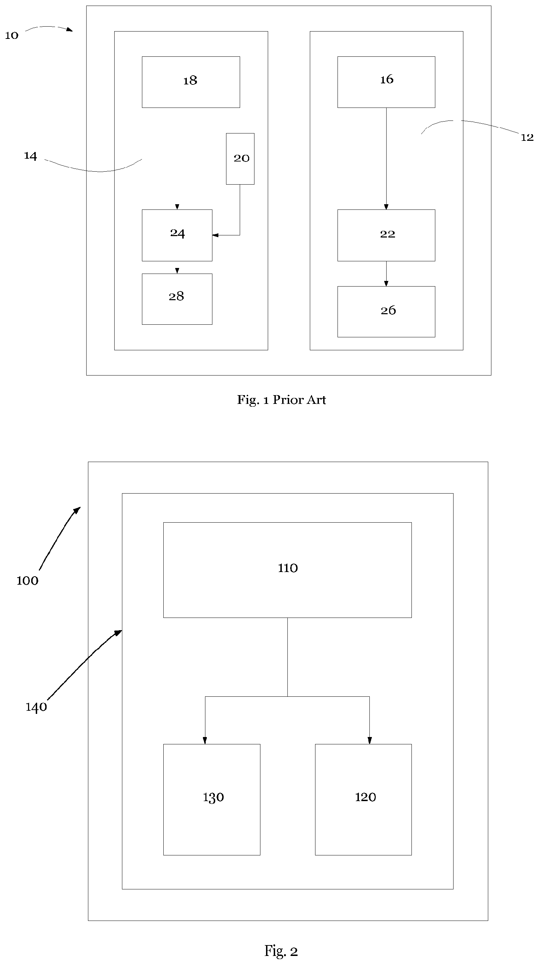

A conventional propulsion system for a spacecraft 10 is shown in Fig. 1. The propulsion system includes an electrical propulsion system 12 and a separate chemical propulsion system 14. The electrical propulsion system 12 has a first propellant supply system 16 and the chemical propulsion system 14 has a second propellant supply system 18. The chemical propulsion system 14 can also comprise an oxidiser supply 20 and a combustion chamber 24. The chemical thruster 28 is used to direct exhaust gases. The electrical propulsion system 12 comprises an electric thruster 26, which incorporates a plasma generator 22.

The propulsion system for the spacecraft 10 includes both the electrical propulsion engine 12 and the chemical propulsion engine 14 because they each have specific advantages which necessitate their place on a spacecraft 10. In particular, chemical propulsion engines are typically used for high thrust requirements and electrical propulsion engines are used for high Iₛₚ manoeuvers. Where a mission requires both high thrust and high efficiency, two separate systems are added to the spacecraft 10, at a significant cost and mass penalty.

Embodiments of the application are directed to a new variant of propulsion system for a spacecraft 100 as depicted in Fig. 2. In particular, Fig. 2 shows a hybrid propulsion system 140 comprising an electrical propulsion engine 120 and a chemical propulsion engine 130. A single common propellant feed system 110 is connected with both of the chemical engine 130 and the electrical engine 120. The hybrid propulsion system 140 can combine the low cost technologies, processes, high thrust engines, and propellants of chemical propulsion engines with the high specific impulse advantages of electrical propulsion engines within a single hybrid system.

Hybrid propulsion systems as described herein relate to propulsion systems comprising a chemical engine and an electrical engine which are both fuelled by a common propellant. Such hybrid propulsion systems can be defined as chemical-electrical hybrid propulsion systems. The hybrid propulsion systems of the application are not related to hybrid rocket technology, which uses liquid and solid propellants for chemical propulsion.

A hybrid propulsion system may use a single propellant for both chemical and electrical propulsion. In this way, the hybrid propulsion system allows for EOR, Chemical Orbit Raising (COR), and chemical or electrical station keeping/attitude control, using a single common propellant feed system. This removes the need for using separate chemical and electrical propulsion systems on the same spacecraft, dramatically reducing system size and cost while still providing both high thrust and high specific impulse capabilities.

Hybrid propulsion systems require fewer components than a traditional propulsion system with separate electrical and chemical propulsion engines. In addition, there is no distinction between electrical propulsion engines and chemical propulsion engines while using inexpensive and potentially less toxic propellants. This dramatically reduces the direct system cost through equipment part counts; reduces the system mass and therefore the launch cost; reduces the integration and test complexity, cost, and duration; reduces the handling constraints and safety measures; and reduces operations at the launch site.

Furthermore, a consistent architecture for the hybrid propulsion system can be maintained for a variety of platform functionalities. That is, a common propulsion feed system can be used for all platform types with only the orbit raising engines selected for the application. This permits reduction in complexity without any reduction in flexibility.

Cases which would benefit from a hybrid propulsion system that is able to deliver both high thrust and high Iₛₚ include: small satellites, constellations, telecommunication platforms, imaging satellites, lunar supply, high power electric propulsion, in-orbit servicing missions, and deep space missions.

An additional advantage provided by embodiments of the presently disclosed hybrid propulsion system is the absence of a preliminary propellant decomposition stage. In other words, in some embodiments the propellant is not chemically decomposed or chemically altered prior to being fed into the electrical propulsion engine. Alternatively, it may be described that the propellant used to fuel the electrical propulsion engine is chemically identical to the propellant used to fuel the chemical propulsion engine.

The hybrid propulsion system disclosed herein combines the low cost technologies, processes, high thrust engines and propellants of chemical propulsion with the high specific impulse engines of electric propulsion within one system.

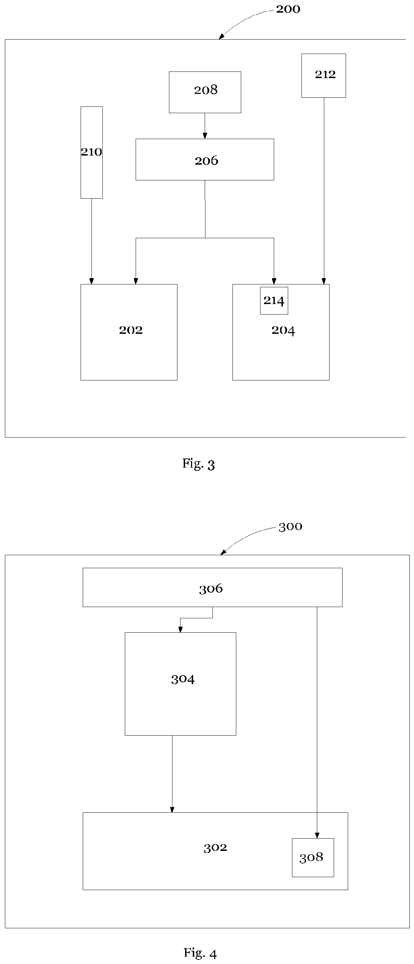

In an embodiment, referring now to Fig. 3, a hybrid propulsion system 200 may include a chemical propulsion engine 202, an electrical propulsion engine 204 including an evaporator 214, a propellant supply system 206, a pressurant gas system 208, a second hypergolic propellant supply 210, and a power processing unit 212. It will be understood that although only a single chemical propulsion engine 202 and a single electrical propulsion engine 204 has been depicted for the sake of clarity, a hybrid propulsion system may have more that one of each type of engine.

In some embodiments, the propellant feed system comprises a device for storing a propellant, such as a tank. The propellant feed system may alternatively be referred to as a propellant supply system.

The electrical propulsion engine is configured to generate thrust with high Iₛₚ by converting electrical energy into kinetic energy. The electrical propulsion engines comprise at least one electric thruster, configured to accelerate ions or plasma using an electric, magnetic or electro-magnetic field. In this way, the electrical propulsion engine generates thrust acting on the spacecraft. Electrical propulsion engines also generally include one or more neutralisers. For example, electrical propulsion engines may comprise a cathode neutraliser, such as a hollow cathode.

In some embodiments, the electrical propulsion engine 204 may comprise an electrostatic propulsion engine. Electrostatic propulsion engines, such as ion thrusters, rely on the Coulomb force for acceleration. In other embodiments, the electrical propulsion engine 204 may comprise an electromagnetic propulsion engine. Electromagnetic propulsion engines rely on the Lorentz force or the effect of an electromagnetic field to accelerate ions. Alternatively, the electrical propulsion engine may be described as an engine which accelerates ions and therefore requires ionisation.

Suitable electrostatic and electromagnetic engines include: Hall thrusters, gridded ion engines, ion engines, radiofrequency ion engines, magnetoplasma dynamic thrusters, colloid thrusters, field-emission electric propulsion (FEEP), helicon double layer thrusters, high efficiency multistage plasma thruster (HEMPT), variable specific impulse magnetoplasma rocket (VASMIR), vacuum arc thrusters, RF thrusters, and electron cyclotron resonance thrusters. The use of electrostatic and electromagnetic thrusters allows for stronger benefits in terms of achievable Iₛₚ and thus system performance.

Electrothermal thrusters, such as arcjets and resistojets are out of scope for use in the hybrid propulsion system as described herein.

The chemical propulsion engine is configured to generate a high thrust by converting chemical internal energy of the propellant into kinetic energy through a combustion reaction. High thrust chemical propulsion engines typically use a variety of chemically active solid, liquid or gaseous propellants to generate thrust by expelling gases thermodynamically through a nozzle. These systems generate high thrust (typically ≥0.15N up to several hundred Newtons) at specific impulses typically lower than 500 seconds.

Suitable chemical propulsion engines 202 include monopropellant and bipropellant engines.

In some embodiments, the hybrid propulsion system comprises an second hypergolic propellant supply 210. Where a hybrid propulsion system comprises an second hypergolic propellant, the chemical propulsion engine may be defined as bipropellant. Suitable second hypergolic propellant include but are not limited to nitrogen based compounds, such as nitrogen tetroxide, mixed oxides of nitrogen, nitric acid, nitrous oxide, red fuming nitric acid, and ammonia perchlorate, as well as hydrogen peroxide and oxygen.

In some embodiments, a common propellant, i.e. a propellant common to both the electrical propulsion engine and the chemical propulsion engine, is stored within a tank in the propellant feed system. In a spacecraft, a propellant may be described as a substance which is used to produce thrust. A propellant may be stored in solid, liquid or gaseous form.

In some embodiments, the propellant feed system is self-pressurised.

Propellants that are capable of undergoing exothermic chemical reactions can typically be employed in a chemical propulsion engine. Propellants which are easily ionisable can typically be employed in electrical propulsion engines. In some embodiments, the common propellant is capable of undergoing chemical conversion in the chemical propulsion engine. For example, the common propellant may be capable of being chemically combusted in the chemical propulsion engine in order to produce thrust. For example, the common propellant may be described as being burnable in the chemical prolusion engine.

A propellant which is capable of reacting in a chemical propulsion engine and generate thrust itself is called a monopropellant. An example of a monopropellant is hydrazine. A chemical propulsion engine which requires two liquids, i.e. a fuel and an oxidiser, are called bipropellant. An exemplary bipropellant engine may rely on liquid hydrogen as the propellant and liquid oxygen as the oxidiser or monomethylhydrazine and nitrogen tetroxide. The common propellant may be a monopropellant or either propellant of a hypergolic bipropellant

In some embodiments, the common propellant has an ionisation energy less than 20 eV. For example, the ionisation energy may be less than 18 eV, less than 15 eV, less than 12 eV, or less than 10 eV. In some embodiments, the common propellant has an ionisation energy between 7 and 8 eV.

In some embodiments, the common propellant is stored as a liquid or gas. The common propellant may be a liquid at ambient temperature and storage pressure.

The ambient temperature may be the ambient temperature of a spacecraft in normal operating conditions. In some embodiments, the ambient temperature may be between about 0 and about 75 °C.

In some embodiments, the ambient storage pressure of the common propellant within a tank is between about 4 and about 25 bar.

In some embodiments, the common propellant has a density greater than 600 kg/m³ at ambient temperature and storage pressure. For example, the common propellant has a density greater than 650 kg/m³, greater than 700 kg/m³, or greater than 750 kg/m³.

In some embodiments, the common propellant comprises tri-amines, such as trimethylamine and tripropylamine, hydrogen peroxide or high test peroxide.

The above-mentioned common propellants have the required chemical properties which allow them to be used in both a chemical propulsion engine and an electrical propulsion engine. In particular, these chemicals are burnable in a chemical propulsion engine and can also be used in an electrical propulsion engine without suffering compatibility issues.

Another advantage associated with use of tri-amines is that tri-amines are compatible with stainless steel, titanium, and polytetrafluoroethylene (PTFE) and therefore existing components and systems may be used, avoiding the need to develop new system components.

Common propellants employable in a hybrid propulsion system as described herein are cheap and readily available. This avoids the need to use conventional propellants which are often expensive, difficult to extract/distil, challenging to store or not considered "green", i.e. environmentally friendly.

For example, the vast majority of conventional electrical propulsion engines use xenon as a propellant. Xenon is one of the rarest gases and requires a large amount of energy to distil, having a major impact on the green rating of the propellant. It is not uncommon for the fuel cost alone for an electric propulsion system to be well in excess of USD 1300 per kg. The rarity of xenon also means that the supply can be intermittent, and requires long-term agreements to ensure an adequate secure supply.

Xenon is a widely used propellant for electrical engines because, in particular: (i) it is an inert gas; (ii) it is highly compressible, which allows storage at moderate pressures and volumes; (iii) it provides a good overall electrical propulsion system efficiency, due to it being readily ionisable and having a high mass / charge ratio. The common propellants employable in a hybrid propulsion system as described herein can provide these advantages, while avoiding the cost, supply challenges and environmental implications associated with Xenon.

Tri-amines, such as trimethylamine and tripropylamine, hydrogen peroxide, and high test peroxide represent relatively "green" propellants which surprisingly can be used in both a chemical propulsion engine and an electrical propulsion engine.

In some embodiments, the electrical propulsion engine 204 further comprises an evaporator. The evaporator may be configured to evaporate the common propellant in order to enhance the compatibility of the propellant with the electrical propulsion engine.

In some embodiments, the common propellant is fed directly into the electrical propulsion engine. For example, the electrical propulsion engine may not comprise an evaporator. In such systems, the propellant may evaporate by other means, such as through direct contact with an anode, or gas distributer, located within the electrical engine.

In some embodiments, the electrical propulsion engine comprises a mass flow controller. A mass flow controller may be required because electrical propulsion engines typically require lower inlet pressures than chemical propulsion engines and require a controlled mass flow; the overall pressure of the hybrid propulsion system is dictated by the pressure requirements of the chemical propulsion engine so a controller is needed.

In some embodiments, the chemical propulsion engine is configured to handle pressures of between about 4 and about 25 bar.

In some embodiments, the mass flow controller is configured to deliver propellant to the electrical propulsion engine at a pressure less than about 5 bar. For example, the pressure may be less than 4 bar, less than 3 bar, less than 2 bar or less than 1 bar.

In some embodiments, the hybrid propulsion system further comprises at least one processor. For example, the hybrid propulsion system may comprise 1, 2, 3, 4 or 5 processors. The processors may be configured to control the propulsion system. For example, a processor may be configured to control a high thrust mode of the system using the chemical propulsion engine. In addition or alternatively, a processor may be configured to control a high Iₛₚ mode of the hybrid propulsion system using the electrical propulsion engine.

In some embodiments, the chemical engine has a maximum Iₛₚ of about 500 seconds and a minimum thrust of about 0.15 N.

In some embodiments, the electrical engine has a minimum Iₛₚ of about 500 seconds and a maximum thrust of about 1 N.

Typical thrusts and Iₛₚ values for conventional chemical and electrical engines may be found in Table 1.

**Table 1**

| **Engine type** | **I_{SP} [secs]** | **Thrust [N]** |
|---|---|---|
| Cold gas (N2) | <80 | 10mN<T<5N |
| Hydrazine (monopropellant) | 210 | 1, 5, 22, 200 |
| H2O2 (monopropellant) | 180 | 10 |
| HAN-ADN (monopropellant) | | |
| Hybrid Engine (H₂O₂+Plastic) | 290 to 310 | 200 |
| Bi-propellant (MON/MMH) | 318 to 323 | 10, 20, 400 |
| Cryogenic (O₂/H₂) | 400 to 470 seconds | kN to MN |
| Grid (Electrical propulsion) | 300 < X < 4000 | 10^-4 to 10^-2 |
| Hall effect (Electrical propulsion) | 800 < X < 1800 | 10^-3 to 10^-1 |
| Electrospray Thruster (FEEP & Colloidal Micro propulsion engines) | >1000 | 10^-6 to 10^-3 |
| Next Generation Green Systems | 315 < X < 500 | 1 < X <400 |

In some embodiments, the propellant feed system 206 may be configured to deliver a controlled mass flow of propellant to both the chemical propulsion engine and the electrical propulsion engine. The propellant feed system may be described as a chemical propellant feed system.

The feed system may comprise pipework and flow control devices, such as valves, orifices, and heaters, to control the propellant state and mass flow to the engines.

In some embodiments, the hybrid propulsion system 200 includes a power processing unit 212. The power processing unit 212 manages the electrical parameters of the power coming from the spacecraft power supply to tailor it to the requirements of the electrical engine. A power processing unit 212 represents an alternative to a direct drive solution.

In some embodiments, the hybrid propulsion system 200 further comprises a pressurant gas system 208. A pressurant gas system may control the pressure in a propellant tank.

In some embodiments, the pressurant gas system comprises a pressurant. For example, the pressurant may be an inert gas. An inert gas is a gas which is generally unreactive with other substances. In other words, an inert gas is a non-reactive gas. Inert gases can include both elemental gases, such as noble gases, and molecular gases. Examples of inert gases include helium, neon, argon, krypton, xenon, and nitrogen. Preferably, the inert gas is helium or argon.

In some embodiments, the hybrid propulsion system which includes the pressurant gas system is a pressure regulated system, a repressurising system, or a blowdown system. Preferably, the hybrid propulsion system is pressure regulated.

In some embodiments, the propellant is self-pressurised.

According to a second aspect of the invention as shown in Fig. 4, a spacecraft propulsion system 300 comprises an electrical propulsion engine 302, a propellant supply system 304, a pressurant gas system 306, and a neutraliser 308 located within the electrical propulsion engine 304. As depicted in Fig. 4, pressurant gas from the pressurant gas system 306 is fed directly into the neutraliser 308.

Feeding the pressurant gas directly into the neutraliser of the electrical propulsion engine minimises modifications required to existing electrical propulsion engines and any potential neutraliser compatibility issues.

It is known that one of the most sensitive components of an electrical propulsion engine is the neutraliser (for example the cathode) and the propellant used must not degrade the condition of the neutraliser, which may decrease the efficiency of the electrical propulsion engine or may even prevent the engine from operating entirely. As a result of this, only a very specific group of chemicals are known to be suitable for use in an electrical propulsion engine. One such suitable known chemical, as discussed above, is xenon.

In some embodiments, the common propellant is used as the propellant for the electrical propulsion engine and the pressurant, such as an inert gas (for example helium, neon, argon, krypton, xenon or nitrogen) is fed directly into the neutraliser of the electrical propulsion engine. Feeding the pressurant directly to the neutraliser prevents the propellant from destroying the cathode of the electrical propulsion engine and allows the use of a propellant which is relatively cheap, readily available, and "green".

Although embodiments of the present invention have been shown and described, it will be appreciated by those skilled in the art that changes may be made in these embodiments without departing from the invention, the scope of which is defined in the appended claims. Various components of different embodiments may be combined where the principles underlying the embodiments are compatible.

### Clauses

The following clauses describe embodiments of the invention. They are not claims.
1. A propulsion system for a spacecraft comprising:
   at least one chemical propulsion engine;
   at least one electrical propulsion engine; and
   a propellant feed system comprising:
      a propellant supply system including at least one tank to store a common propellant;
   wherein the propellant supply system is configured to deliver a controlled flow of the common propellant to both the chemical propulsion engine and the electrical propulsion engine.
2. The propulsion system according to clause 1, wherein the propellant feed system further comprises a pressurant gas system comprising a pressurant gas.
3. The propulsion system according to clause 2, wherein the pressurant gas system is a repressurising system.
4. The propulsion system according to clause 2 or clause 3, wherein the pressurant gas is an inert gas.
5. The propulsion system according to clause 4, wherein the inert gas is helium, neon, argon, krypton, xenon or nitrogen.
6. The propulsion system according to any one of clauses 2 to 5, wherein the electrical propulsion system further comprises at least one neutraliser.
7. The propulsion system according to clause 6, wherein the pressurant gas is fed directly into the at least one neutraliser.
8. The propulsion system according to clause 6 or clause 7, wherein the at least one neutraliser is a hollow cathode.
9. The propulsion system according to clause 1, wherein the propellant feed system comprises a self-pressurised pressurant gas system.
10. The propulsion system according to any one of clauses 1 to 9, wherein the at least one electrical propulsion engine further comprises an evaporator.
11. The propulsion system according to clause 10, wherein the evaporator is configured to process inlet pressures of equal to or greater than a required inlet pressure of the at least one chemical engine.
12. The propulsion system according to any one of clauses 1 to 9, wherein the propellant is fed directly into the electrical propulsion engine.
13. The propulsion system according to any one of clauses 1 to 11, further comprising a processor configured to control a high thrust mode of the propulsion system using the at least one chemical propulsion engine.
14. The propulsion system according to any one of clauses 1 to 12, further comprising a processor configured to control a high Iₛₚ mode of the propulsion system using the at least one electrical propulsion engine.
15. The propulsion system according to any one of clauses 1 to 13, further comprising a power processing unit.
16. The propulsion system according to any one of clauses 1 to 14, wherein the at least one chemical propulsion engine is a bipropellant engine or a monopropellant engine.
17. The propulsion system according to any one of clauses 1 to 16, further comprising a second hypergolic propellant.
18. The propulsion system according to any one of clauses 1 to 17, wherein the common propellant is not chemically decomposed prior to being fed into the electrical propulsion engine.
19. The propulsion system according to any one of clauses 1 to 18, wherein the common propellant has an ionisation energy less than 20 eV and a density at ambient conditions greater than 600 kg/m³.
20. The propulsion system according to any one of clauses 1 to 19, wherein the common propellant is selected from the group consisting of a solid, a liquid monopropellant or a liquid bipropellant pair of substances.
21. The propulsion system according to any one of clauses 1 to 20, wherein the propellant comprises tri-amines, such as trimethylamine and tripropylamine; hydrogen peroxide or high test peroxide.
22. A propulsion system for a spacecraft comprising:
   at least one electrical propulsion engine comprising at least one neutraliser; and
   a pressurant gas system comprising a pressurant gas;
   wherein the pressurant gas is fed directly into the at least one neutraliser.
23. The propulsion system according to clause 22, wherein the pressurant gas system is a repressurising system.
24. The propulsion system according to clause 22 or clause 23, wherein the at least one neutraliser is a hollow cathode.
25. The propulsion system according to any one of clauses 22 to 24, wherein the pressurant gas comprises an inert gas.
26. The propulsion system according to clause 25, wherein the inert gas is helium, neon, argon, krypton, xenon or nitrogen.
27. The propulsion system according to any one of clauses 22 to 26, wherein the propulsion system further comprises at least one chemical propulsion engine.
28. The propulsion system according to clause 27, further comprising a processor configured to control a high thrust mode of the propulsion system using the at least one chemical propulsion engine.
29. The propulsion system according to clause 27 or clause 28, further comprising a propellant feed system comprising a propellant supply system including at least one tank to store a common propellant;
   wherein the propellant supply system is configured to deliver a controlled flow of the common propellant to both the chemical propulsion engine and the electrical propulsion engine.
30. The propulsion system according to any one of clauses 22 to 29, wherein the at least one electrical propulsion engine further comprises an evaporator.
31. The propulsion system according to any one of clauses 22 to 34, further comprising a processor configured to control a high Iₛₚ mode of the propulsion system using the at least one electrical propulsion engine.
32. The propulsion system according to any one of clauses 27 to 29, further comprising a processor configured to control a high thrust mode of the propulsion system using the at least one chemical propulsion engine.
33. The propulsion system according to any one of clauses 27 to 29, wherein the at least one chemical propulsion engine is a bipropellant engine or a monopropellant engine.
34. The propulsion system according to any one of clauses 27 to 29, further comprising a second hypergolic propellant.
35. The propulsion system according to any one of clauses 22 to 35, further comprising a power processing unit.
36. The propulsion system according to clause 29, wherein the common propellant is not chemically decomposed prior to being fed into the electrical propulsion engine.
37. The propulsion system according to clause 29, wherein the common propellant has an ionisation energy less than 20 eV and a density at ambient conditions greater than 600 kgs/m³.
38. The propulsion system according to clause 37, wherein the common propellant is selected from the group consisting of a solid, a liquid monopropellant or a liquid bipropellant pair of substances.
39. The propulsion system according to clause 38, wherein the propellant comprises tri-amines, such as trimethylamine and tripropylamine, hydrogen peroxide or high test peroxide.
40. Use of a common propellant in a spacecraft propulsion system comprising at least one electrical propulsion engine and at least one chemical propulsion engine.
41. A method of providing a common propellant to spacecraft propulsion system comprising at least one electrical propulsion engine and at least one chemical propulsion engine.

## Claims

1. A propulsion system for a spacecraft comprising:
at least one chemical propulsion engine;
at least one electrical propulsion engine; and
a propellant feed system comprising:
a propellant supply system including at least one tank to store a common propellant;
wherein the propellant supply system is configured to deliver a controlled flow of the common propellant to both the chemical propulsion engine and the electrical propulsion engine.

2. The propulsion system according to claim 1, wherein the propellant feed system further comprises a pressurant gas system comprising a pressurant gas, wherein the pressurant gas comprises an inert gas, such as helium, neon, argon, krypton, xenon or nitrogen.

3. The propulsion system according to claim 2, wherein the electrical propulsion system further comprises at least one neutraliser, such as a hollow cathode and wherein the pressurant gas is fed directly into the at least one neutraliser.

4. The propulsion system according to any one of claims 1 to 3, further comprising a processor configured to control a high thrust mode of the propulsion system using the at least one chemical propulsion engine and/or a processor configured to control a high Iₛₚ mode of the propulsion system using the at least one electrical propulsion engine.

5. The propulsion system according to any one of claims 1 to 4, wherein the common propellant is not chemically decomposed prior to being fed into the electrical propulsion engine.

6. The propulsion system according to any one of claims 1 to 5, wherein the common propellant has an ionisation energy less than 20 eV and a density at ambient conditions greater than 600 kg/m³.

7. The propulsion system according to any one of claims 1 to 6, wherein the common propellant comprises tri-amines, such as trimethylamine and tripropylamine; hydrogen peroxide or high test peroxide.

8. A propulsion system for a spacecraft comprising:
at least one electrical propulsion engine comprising at least one neutraliser; and
a pressurant gas system comprising a pressurant gas;
wherein the pressurant gas is fed directly into the at least one neutraliser.

9. The propulsion system according to claim 8, wherein the pressurant gas comprises an inert gas, such as helium, neon, argon, krypton, xenon or nitrogen.

10. The propulsion system according to claim 8 or claim 9, wherein the propulsion system further comprises at least one chemical propulsion engine.

11. The propulsion system according to claim 10, further comprising a propellant feed system comprising a propellant supply system including at least one tank to store a common propellant;
wherein the propellant supply system is configured to deliver a controlled flow of the common propellant to both the chemical propulsion engine and the electrical propulsion engine.

12. The propulsion system according to claim 11, wherein the common propellant has an ionisation energy less than 20 eV and a density at ambient conditions greater than 600 kg/m³.

13. The propulsion system according to claim 11 or claim 12, wherein the common propellant comprises tri-amines, such as trimethylamine and tripropylamine, hydrogen peroxide, or high test peroxide.

14. Use of a common propellant in a spacecraft propulsion system comprising at least one electrical propulsion engine and at least one chemical propulsion engine.

15. A method of providing a common propellant to a spacecraft propulsion system comprising at least one electrical propulsion engine and at least one chemical propulsion engine.
